(19) Europäisches Patentamt / European Patent Office / Office européen des brevets

(11) **EP 4 206 483 B1**

(12) **EUROPEAN PATENT SPECIFICATION**

(45) Date of publication and mention
of the grant of the patent:
**25.03.2026 Bulletin 2026/13**

(21) Application number: **22215716.6**

(22) Date of filing: **21.12.2022**

(51) International Patent Classification (IPC):
*F16C 19/22* (2006.01)    *F16C 19/26* (2006.01)
*F16C 19/36* (2006.01)    *F16C 33/46* (2006.01)

(52) Cooperative Patent Classification (CPC):
**F16C 19/22; F16C 19/26; F16C 19/364;
F16C 33/4635; F16C 33/467;** F16C 2208/60;
F16C 2220/04; F16C 2240/82; F16C 2326/10

(54) **ROLLING BEARINGS, IN PARTICULAR FOR RAILWAY USE**

WÄLZLAGER, INSBESONDERE FÜR DEN SCHIENENEINSATZ

PALIER À ROULEMENT, EN PARTICULIER POUR L'UTILISATION FERROVIAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.01.2022 IT 202200000059**

(43) Date of publication of application:
**05.07.2023 Bulletin 2023/27**

(73) Proprietor: **Aktiebolaget SKF
415 50 Göteborg (SE)**

(72) Inventors:
• **Ribet, Massimiliano
10063 Pomaretto (TO) (IT)**
• **Rossi, Mario
10098 Rivoli (TO) (IT)**
• **Organisciak, Michel
37000 Tours (FR)**
• **Geltner, Christoph
97421 Schweinfurt (DE)**

(74) Representative: **Kohl, Thomas
SKF GmbH
Gunnar-Wester-Strasse 12
97421 Schweinfurt (DE)**

(56) References cited:
EP-A1- 1 746 297    EP-A2- 1 754 901
EP-A2- 1 785 638    CN-B- 101 334 064
JP-A- 2000 240 661    JP-A- 2007 120 548

**Description**

Technical field of the invention

The present invention relates to a retaining cage for the rolling elements of a rolling bearing, particularly for a rolling bearing intended for railway use, and to an associated rolling bearing, which are designed to maximize the content of lubricating grease for the rolling elements that can be inserted into the rolling bearing in the retaining cage of the rolling elements.

Prior art

It is known that, particularly in rolling bearings for railway use, where the intervals between dismantling operations for maintenance of the axles must be as long as possible for obvious reasons of economics and operating practicability, it is important to be able to pack a sufficient amount of lubricating grease into the rolling bearings of railway axles to maintain optimal lubrication of the rolling elements of the rolling bearing, which usually consist of pairs of rings of tapered or cylindrical rollers, over a period of time. A railway axle provided with rolling bearings of this type is known, for example, from US9016950B2.

Unfortunately, it has been found that current methods for designing rolling bearings cannot provide a fully satisfactory service life for a rolling bearing, the service life usually being below the level known as "L10", which indicates the expected fatigue life of the bearing.

Brief description of the invention

The object of the present invention is to provide a retaining cage for the rolling elements of a rolling bearing, particularly for a rolling bearing intended for railway use, and an associated rolling bearing, with the aim of increasing the useful space for lubricating grease within the bearing, thus overcoming or at least mitigating the drawbacks of the prior art.

According to the invention, therefore, a rolling bearing is provided, particularly for railway use, having the characteristics stated in the attached claims. A rolling bearing with the features of the preamble of claim 1 is known from EP 1 785 638 A2.

Brief description of the drawings

The invention will now be described with reference to the attached drawings, which show a non-limiting example of its embodiment, in which:

- Figure 1 shows schematically a side view in elevation of a cage for rolling bearings produced according to the invention and intended to retain corresponding rolling elements of a rolling bearing, particularly for fitting to railway axles;
- Figure 2 shows schematically and in a simplified manner a front view in elevation of the cage for rolling bearings of Figure 1, cut transversely to one of its axes of symmetry;
- Figure 3 shows schematically a partial view in elevation of the cage of Figure 1 with an inserted rolling element, consisting of a tapered roller in the illustrated example;

- Figure 4 shows schematically a partial view in elevation and in radial cross section of an outer ring of a rolling bearing using the cage of Figures 1 and 3; and
- Figure 5 shows schematically in radial cross section a longitudinal view of a railway axle provided with a pair of rolling bearings according to the invention.

Detailed description

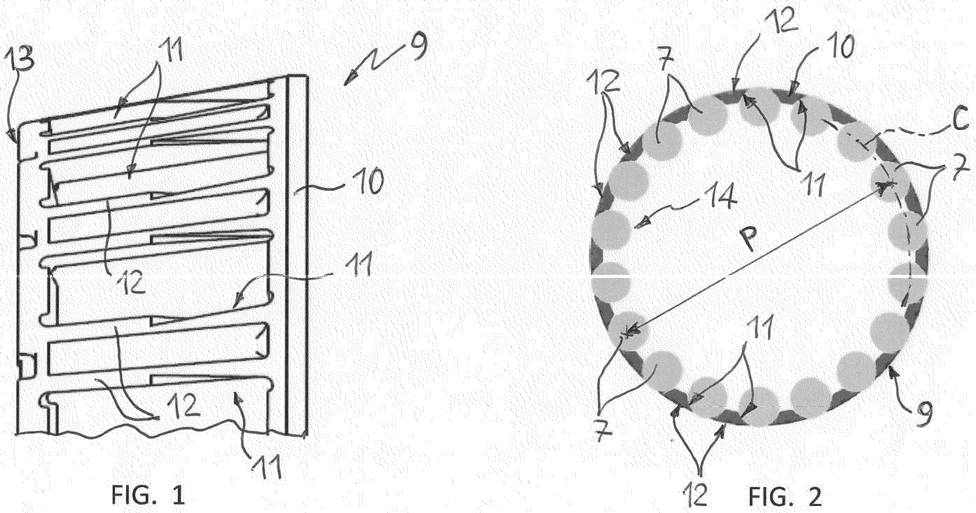

With reference to Figures 1 to 5, in these figures the whole of a railway axle is indicated by 1, the axle being shown in a purely schematic and partial way for the sake of simplicity, and comprising a rolling bearing 2 mounted so as to make two mechanical elements 3 and 4 rotatable relative to each other. In the non-limiting example shown, the rolling bearing 2 is placed between a spindle 3 for receiving a railway carriage wheel (known and not illustrated for the sake of simplicity) and a railway axle box 4 of a known type.

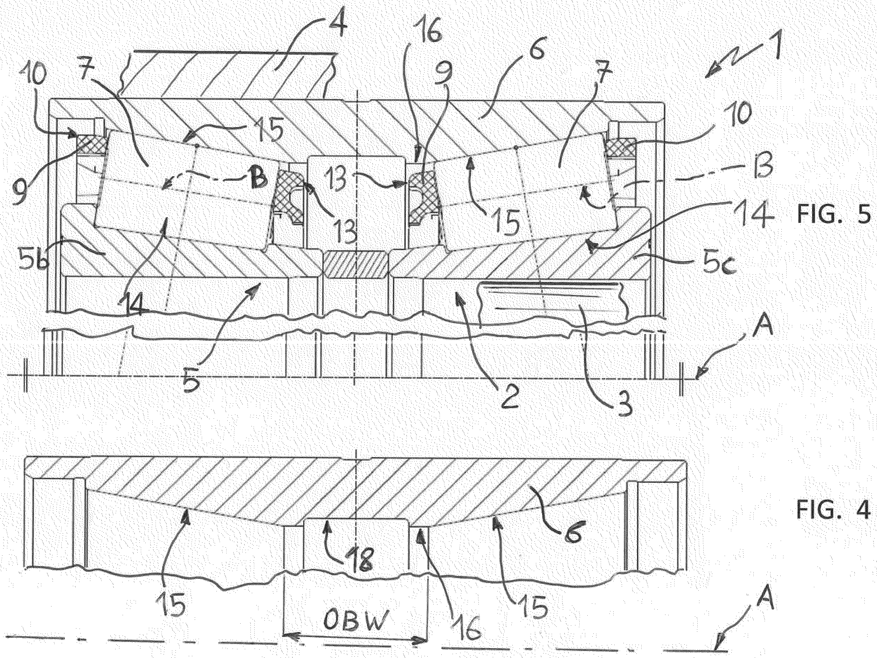

Here and below, reference will be made to this embodiment, in which the rolling bearing 2 is of the type suitable for railway applications, without thereby losing its generality, the invention being applicable to any type of rolling bearing, at least if it is of the type having a double row of rolling elements, preferably tapered or cylindrical rollers, as in the non-limiting example of embodiment that is illustrated. It is therefore also possible to envisage the application of the invention, as described below, to a pair of rolling bearings 2 with a single row of rolling elements, mounted adjacently and opposite each other, in an arrangement equivalent, in terms of application, to the single bearing 2 of Figure 5.

The (or each) rolling bearing 2 comprises a radially inner ring 5, which in the non-limiting example of embodiment is of the type divided into two half-rings 5b and 5c, a radially outer ring 6, a plurality of rolling elements 7 interposed between the inner ring 5 and outer ring 6 to make these rings rotatable relative to each other, and at least one retaining cage 9 for the rolling elements 7.

In the illustrated non-limiting example, the single bearing 2 is a bearing having a double row of rolling elements 7, and therefore includes two retaining cages 9 for the rolling elements 7, mounted symmetrically and facing each other. The rolling elements 7 are chosen from the group consisting of tapered rollers and cylindrical rollers.

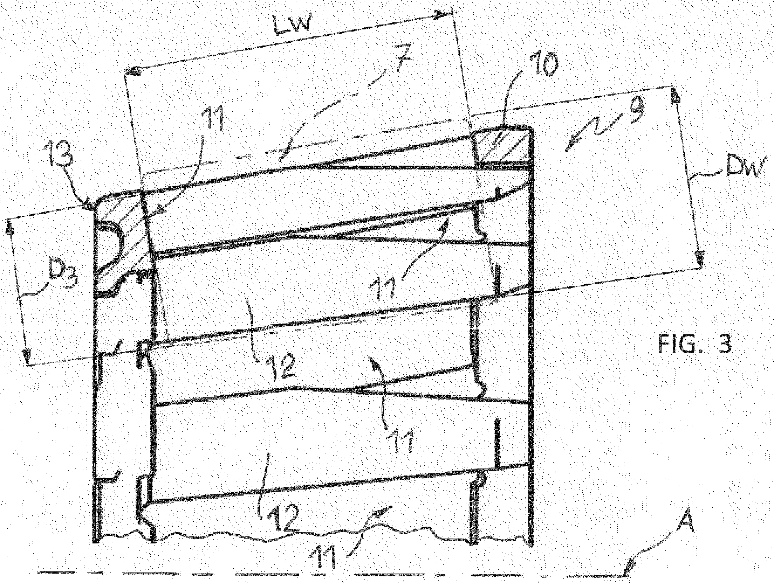

Each cage 9, shown on an enlarged scale in Figures 1 and 3 and highly schematically, on a reduced scale, in Figure 2, in the form of a cross section, comprises an annular body 10 provided with a plurality of radially passing pockets or seats 11, each of which is configured for idly housing a corresponding rolling element 7, which in the illustrated case is a tapered roller 7.

The seats or pockets 11 are circumferentially separated by the respective cross pieces 12 of the cage 9 (Figure 2), arranged longitudinally relative to a direction of extension of an axis of symmetry A of the rolling bearing 2 and, in the present case, of its outer ring 6 (Figure 4), and are substantially parallel to an axis B of symmetry and rotation of the respective rolling element 7 immediately adjacent. The cross pieces 12, together with the axis B, form an angle of less than 90° with the axis A; that is to say, they are inclined so as to converge towards the axis A at a first end 13 of the annular body 10. The ends 13 are arranged between the rings 5 and 6 of the rolling bearing 2 facing and adjacent to each other, separated by a predetermined axial gap (parallel to the axis A), as clearly shown in Figure 5.

In the preferred example of embodiment of the invention and as shown in Figure 5, the rolling elements 7 are collected to form two annular rows 14 of tapered rollers 7, said crowns 14 being carried by a pair of retaining cages 9, each cage housing in its respective pockets or seats 11 the rolling elements 7 of a respective row 14 of rolling elements (tapered rollers) 7.

The cages 9 of the aforesaid pair of cages are positioned opposite and adjacent to each other between the inner rings 5 and outer rings 6, at respective annular raceways 15 (Figure 5) for the rolling elements 7, formed on a radially inner lateral surface 16 of the outer ring 6, as shown more clearly on an enlarged scale in Figure 4.

The annular body 10 of the (or each) retaining cage 9 for the rolling elements 7 of the rolling bearing 2 has an axis of symmetry coinciding with the axis A, and has its plurality of radially passing pockets or seats 11 positioned circumferentially in a row and longitudinally relative to the axis of symmetry A.

The pockets or seats 11 are formed on the annular body 10 in a predetermined number N, which, according to an aspect of the invention, is established during the design of the cage 9, using the formula [1]:

$$[1] \qquad N° = \frac{\pi P}{k * a * \frac{D_w + D_3}{2}}$$

wherein:

- N is the predetermined number of pockets or seats 11 that are present in the annular body 10;
- P is the primitive diameter of the rolling bearing 2, that is to say the diameter of a circumference C (shown schematically and partially in chained lines in Figure 2) on which the rolling elements 7 are placed in alignment; this is also illustrated visually in Figure 2;
- $D_w$ is the maximum diameter of a rolling element 7, the rolling elements 7 being identical to each other; Dw is illustrated visually in Figure 3 and, in the illustrated example, is the diameter of the major base of the tapered roller forming each rolling element 7, which, when the rolling bearing 2 is mounted on the axle 1, faces in the opposite direction to the end 13 of the corresponding cage 9;
- $D_3$ is the minimum (minor) diameter of the same rolling element 7; in the illustrated example, it is the diameter of the minor base of the tapered roller forming each rolling element 7, which, when the rolling bearing 2 is mounted on the axle 1, faces towards the end 13 of the corresponding cage 9;
- a is a numerical constant that, according to one aspect of the invention, must be between 1.26 and 1.36; therefore the following relation is satisfied:

$$1.26 \leq a \leq 1.36$$

and

- k is a numerical constant that must be between 0.83 and 1 (including the limits of this range) if the rolling elements 7

consist of cylindrical rollers, and that is 1 if the rolling elements 7 consist of tapered rollers; therefore the following relation is satisfied:

cylindrical rollers

$$0.83 \leq k \leq 1;$$

tapered rollers

$$K = 1.$$

A retaining cage 9 according to the invention therefore always has a number of seats or pockets 11, or in other words the bearing 2 includes a number of rolling elements N for each row 14 of rolling elements 7, that is equal to the number N provided by formula [1], representing a compromise between the acceptable dimensions of the rolling elements 7, their total number, and the overall dimensions of the bearing 2 and of the cage 9, which surprisingly makes it possible to obtain a friction torque of the bearing 2 that is equal to or less than that of known rolling bearings of comparable types and dimensions, while simultaneously increasing the free inner volume of the bearing 2 between the rings 5 and 6 and left free by the rolling elements 7 and the cages 9, with the result that this volume can be filled, in use, with lubricating grease for the rolling elements 7, thereby lengthening the service life of the bearing 2.

The cage 9 is made entirely in one piece, by injection moulding of a synthetic plastic material. Essentially, it is entirely formed by the annular body 10, which is made by injection moulding, preferably of a polyamide.

Evidently, the number of pockets or seats 11 present on the annular body 10 of the (or each) cage 9 corresponds to the number of rolling elements 7 retained by said cage 9, and therefore the following relation is satisfied for each row of rolling elements 7 present in the rolling bearing 2:

Number of pockets 11 = Number of rolling elements (rollers) 7 = N where N is the value provided by formula [1] described above.

According to the invention, the pockets or seats 11 of the annular body 10 of the (or each) cage 9 or a rolling bearing 2 according to the invention each have a longitudinal extension Lw (Figure 3), measured parallel to the raceway 15 of a respective rolling element 7 housed in said pocket or seat 11, that has a predetermined value provided, during the design of the cages 9, by formula [2]:

$$[2] \qquad l_w = \mathrm{b} * 1.73 * D_w$$

- wherein $l_w$ is said longitudinal extension Lw of each pocket or seat 11, as defined above, of a cage 9 made according to the invention; and
- Dw is the maximum diameter of a rolling element 7, the rolling elements 7 of the same row of rolling elements being identical to each other; and
- b is a numerical constant that, according to a further aspect of the invention, must always be between 0.83 and 1.16.

According to a further aspect of the invention, the raceways 15 are separated from each other by a predetermined axial space OBW (Figure 4), defined by an annular portion 18 of the radially inner lateral surface 16 of the outer ring 6.

Said axial space OBW substantially coincides with said axial gap present between the two facing and adjacent ends 13 of the pair of cages 9 in which the two rows 14 of rolling elements (tapered rollers) 7 are housed, since its measurement is exactly equal to the distance between the two adjacent raceways 15.

According to one aspect of the invention, the value of said predetermined axial space or gap OBW must satisfy the formula:

$$[3] \qquad OBW = c * 1.17 * D_w$$

where Dw is as defined above, that is to say the maximum diameter of a rolling element 7, and
c is a numerical constant that must be between 1.1 and 1.93 (including the limits of this range) if the rolling elements 7 consist of cylindrical rollers, and must be between 0.9 and 1.85 (including the limits of this range) if the rolling elements 7 consist of tapered rollers; in other words, the following relation is satisfied:
cylindrical rollers

$$1.1 \le c \le 1.93;$$

tapered rollers

$$0.9 \le c \le 1.85.$$

When, as in the non-limiting example of embodiment illustrated, the rolling elements consist of tapered rollers 7 and are collected to form two annular rows 14 of rolling elements, each row carried by a respective retaining cage 9, the tapered rollers 7 forming each row 14 of rolling elements are arranged in the pockets or seats 11 so as to present the aforesaid minimum diameter $D_3$ towards the tapered rollers 7 of the other crown 14 of rolling elements.

When the rolling elements 7 consist of cylindrical rollers, according to an embodiment of the invention which, for the sake of simplicity, is not illustrated, since it is evident to those skilled in the art, in this case also the rolling elements 7 (cylindrical rollers) are collected to form two annular rows 14 of rolling elements 7, each row 14 being carried by a respective retaining cage 9. In this case, evidently, the aforesaid minimum and maximum diameter of a rolling element 7 are identical, but formulae [1] and [2] described above remain valid, and therefore the bearing 2 with cylindrical rollers will conform to the same dimensional parameters as those defined in said formulae [1] and [2].

According to a further aspect of the invention, it has been found that, in order to obtain a reduction in the friction torque of a rolling bearing 2 according to the invention, the number N of pockets or seats 11 present in each retaining cage 9 and their longitudinal extension Lw, as defined above, must, in combination, simultaneously satisfy equations [1] and [2]. This is true not only of bearings 2 with tapered rollers but also of those with cylindrical rollers.

As mentioned above, in the axle 1 of Figure 5, instead of using a single bearing 2 with two rows of tapered rollers, it is possible, according to the invention, to use two rolling bearings 2 with a single row of tapered rollers each, mounted in symmetrically opposing positions, so that the tapered rollers 7 of each bearing with a single row of rollers have their minor bases, that is to say their minimum diameters $D_3$, facing each other. This arrangement would be substantially equivalent to that of Figure 5, and therefore formulae [1] and [2] are also valid for bearings with a single row of rollers. Such a pair of bearings with a single row of rollers would also be mounted adjacently, separated by an axial gap which, in this case, may be identical to the value defined by formula [3] for the gap OBW.

Because of what has been described, it is possible to produce a rolling bearing 2 with a cage 9 made of polyamide which has about 10% fewer cross pieces 12 than a known cage of the same size, with a reduction of about 7% in the length Lw of the pockets 11, and it has been found that this enables the volume of grease inside the bearing 2 to be increased by about 50%, while simultaneously reducing the friction torque of the bearing 2.

A larger grease reservoir and a lower friction torque of the bearing 2 make it possible to prolong the durability of the bearing 2 according to the invention, and therefore the maintenance interval.

By making bearings having a number of rollers given by formula [1] and a roller length (corresponding to the length Lw of the pockets 11) given by formula [2], with a minimum "width" (axial extension) of the hole portion in the outer ring 6 between the pair of adjacent raceways 15 (therefore coinciding with the portion 18 of Figure 4), it is possible to design the "grease holder" according to standards while still achieving a good compromise between L10 (the fatigue life) and the service life of the bearing. This compromise is achieved in the following design steps:

- reducing the friction torque of the bearing as far as possible, by using formulae [1] and [2] in an iterative procedure, until the minimum L10 required by the application/client and the maximum service life of the bearing are achieved;
- simultaneously computing the increase in the amount of grease, using an iterative procedure and verifying it by the simultaneous use of formulae [1], [2] and [3].

All the objects of the invention are therefore achieved.

**Claims**

1. A rolling bearing (2), particularly for railway use, comprising a radially inner ring (5), a radially outer ring (6), a plurality of rolling elements (7) interposed between the inner and outer rings (5, 6) to make them relatively rotatable, and at least one cage (9) for retaining the rolling elements, the cage (9) comprising an annular body (10) provided with a plurality of radially passing pockets or seats (11), each of which is configured to idly accommodate a respective rolling element (7); wherein said pockets or seats (11) are present on the annular body (10) of the cage (9) in a predetermined number (N), corresponding to the number of rolling elements (7) retained in the cage (9), said predetermined number (N) being comprised between a maximum and a minimum value provided by the formula:

$$[1] \quad N° = \frac{\pi P}{k * a * \frac{D_w + D_3}{2}}$$

wherein:

- N is said prefixed number of pockets or seats (11) present in said annular body of the cage;
- P is the primitive diameter of the rolling bearing (2), i.e. the diameter of a circumference (C) on which the rolling elements are aligned;
- Dw is the maximum diameter of a rolling element (7), the rolling elements being identical to each other;
- D3 is the minimum diameter of the same rolling element (7);
- a is a numerical constant that must be between 1.26 and 1.36; and
- k is a numerical constant that must be between 0.83 and 1 if the rolling elements (7) consist of cylindrical rollers and that is 1 if the rolling elements (7) consist of tapered rollers; **characterized by** the fact that, in combination with said prefixed number of pockets or seats (11) given by the above formula [1], the pockets or seats (11) of the annular body (10) of the cage (9) each have a longitudinal extension (Lw), measured parallel to a raceway (15) for a respective rolling element (7) housed in said pocket or seat (11), the raceway being obtained on an inner lateral surface (16) of the outer ring (6), having a value provided by the formula:

$$l_w = \text{b} * 1.73 * D_w \qquad [2]$$

- wherein $l_w$ is the longitudinal extent of each said pocket or seat (11), as defined above;
- Dw is the maximum diameter of a rolling element (7), the rolling elements being identical to each other; and

b is a numerical constant that must always be between 0.83 and 1.16.

2. Rolling bearing (2) according to claim 1, **characterized in that** the rolling elements (7) are collected to form two annular crowns (14) of rolling elements, said crowns (14) being carried by a pair of retaining cages (9), each of the rolling elements (7) of a respective crown (14) of rolling elements being housed in the respective pockets or seats (11) of the cages, said cages (9) of said pair of cages being arranged opposite to each other and side by side between the inner (5) and outer (6) rings, in correspondence with respective annular raceways (15) for the rolling elements (7) obtained on a radially internal lateral surface (16) of the outer ring (6); said raceways (15) being separated from each other by a prefixed axial space (OBW), the value of said prefixed axial space (OBW) having to comply with the formula:

$$OBW = \text{c} * 1.17 * D_w \qquad [3]$$

wherein:

Dw is the maximum diameter of a rolling element (7) as defined above, the rolling elements (7) being identical; and
c is a numerical constant that must be between 1.1 and 1.93 if the rolling elements 7 consist of cylindrical rollers and between 0.9 and 1.85 if the rolling elements 7 consist of tapered rollers.

3. Rolling bearing (2) according to any one of claims 1 or 2, **characterized in that** the rolling elements consist in tapered rollers (7) and are collected to form two annular crowns (14) of rolling elements, each carried by a respective retaining cage (9), the tapered rollers (7) forming each crown (14) of rolling elements being arranged in pockets or seats (11) so as to present towards the tapered rollers (7) of the other crown (14) of rolling elements said minimum diameter (D3).

4. Rolling bearing (2) according to any one of claims 1 or 2, **characterized in that** the rolling elements (7) consist of cylindrical rollers, wherein said minimum (D3) and maximum (Dw) diameters are accordingly identical.

5. Rolling bearing (2) according to any one of claims from 1 to 4, **characterized in that** said annular body (10) of said at least one cage (9) is made of an injection molded polyamide.

6. A method for designing a rolling bearing (2), particularly for railway use, comprising a radially inner ring (5), a radially outer ring (6), a plurality of rolling elements (7) interposed between the inner and outer rings (5, 6) to make them relatively rotatable, and at least one cage (9) for retaining the rolling elements, the cage (9) comprising an annular body (10) provided with a plurality of radially passing pockets or seats (11), each of which is configured to idly accommodate a respective rolling element (7); wherein said pockets or seats (11) are present on the annular body (10) of the cage (9) in a predetermined number (N), corresponding to the number of rolling elements (7) retained in the cage (9), said method comprising the step of

(i)- calculating said predetermined number N using the following formula:

$$N° = \frac{\pi P}{k * a * \dfrac{D_w + D_3}{2}} \qquad [1]$$

wherein:

N is said prefixed number of pockets or seats (11) present in said annular body of the cage;
P is the primitive diameter of the rolling bearing (2), i.e. the diameter of a circumference (C) on which the rolling elements are aligned;
Dw is the maximum diameter of a rolling element (7), the rolling elements being identical to each other;
D3 is the minimum diameter of the same rolling element (7);
a is a numerical constant that must be between 1.26 and 1.36; and
k is a numerical constant that must be between 0.83 and 1 if the rolling elements (7) consist of cylindrical rollers and that is 1 if the rolling elements (7) consist of tapered rollers; and

(ii)- calculating a longitudinal extension (Lw) of said pockets or seats (11), measured parallel to a raceway (15) for a respective rolling element (7) housed in said pocket or seat (11), the raceway being obtained on an inner lateral surface (16) of the outer ring (6), using the following formula:

$$l_w = \text{b} * 1.73 * D_w \qquad [2]$$

- wherein lw is the longitudinal extent of each said pocket or seat (11), as defined above;
- Dw is the maximum diameter of a rolling element (7), the rolling elements being identical to each other; and
- b is a numerical constant that must always be between 0.83 and 1.16.

**Patentansprüche**

1. Wälzlager (2), insbesondere zur Verwendung im Schienenverkehr, umfassend einen radial inneren Ring (5), einen radial äußeren Ring (6), eine Vielzahl von Wälzkörpern (7), die zwischen dem inneren und dem äußeren Ring (5, 6) angeordnet sind, um diese relativ zueinander drehbar zu machen, und mindestens einen Käfig (9) zum Halten der Wälzkörper, wobei der Käfig (9) einen Ringkörper (10) umfasst, der mit einer Vielzahl radial verlaufender Taschen oder Sitze (11) versehen ist, von denen jede so konfiguriert ist, dass sie einen jeweiligen Wälzkörper (7) freilaufend aufnimmt; wobei die Taschen oder Sitze (11) an dem Ringkörper (10) des Käfigs (9) in einer vorbestimmten Anzahl (N) vorhanden sind, die der Anzahl in dem Käfig (9) gehaltener Wälzkörper (7) entspricht, wobei die vorbestimmte Anzahl (N) zwischen einem Maximal- und einem Minimalwert liegt, die durch die folgende Formel gegeben sind:

$$[1] \qquad N° = \frac{\pi P}{k * a * \dfrac{D_w + D_3}{2}}$$

wobei:

- N die vorab festgelegte Anzahl von Taschen oder Sitzen (11) ist, die in dem Ringkörper des Käfigs vorhanden sind;
- P der Primitivdurchmesser des Wälzlagers (2) ist, d. h. der Durchmesser eines Umfangs (C), auf dem die Wälzkörper ausgerichtet sind;
- Dw der maximale Durchmesser eines Wälzkörpers (7) ist, wobei die Wälzkörper zueinander identisch sind;
- D3 der minimale Durchmesser desselben Wälzelements (7) ist;
- a eine numerische Konstante ist, die zwischen 1,26 und 1,36 liegen muss; und

- k eine numerische Konstante ist, die zwischen 0,83 und 1 liegen muss, wenn die Wälzkörper (7) aus zylindrischen Walzen bestehen, und die 1 beträgt, wenn die Wälzkörper (7) aus konischen Walzen bestehen; **dadurch gekennzeichnet, dass** in Kombination mit der durch die vorstehende Formel [1] gegebenen vorab festgelegten Anzahl von Taschen oder Sitzen (11) die Taschen oder Sitze (11) des Ringkörpers (10) des Käfigs (9) jeweils eine Längserstreckung (Lw) aufweisen, die, gemessen parallel zu einer Laufbahn (15) für einen jeweiligen Wälzkörper (7), der sich in der Tasche oder dem Sitz (11) befindet, wobei die Laufbahn auf einer inneren Seitenfläche (16) des äußeren Rings (6) erhalten wird, einen Wert aufweist, der durch die folgende Formel gegeben ist:

$$l_w = b * 1{,}73 * D_w \qquad [2]$$

- wobei $l_w$ die Längserstreckung jeder der Taschen oder Sitze (11) wie vorstehend definiert ist;
- Dw der maximale Durchmesser eines Wälzkörpers (7) ist, wobei die Wälzkörper zueinander identisch sind; und
b eine numerische Konstante ist, die stets zwischen 0,83 und 1,16 liegen muss.

2. Wälzlager (2) nach Anspruch 1, **dadurch gekennzeichnet, dass** die Wälzkörper (7) zu zwei ringförmigen Wälzkörperkränzen (14), wobei die Kränze (14) von einem Paar Käfigen (9) getragen werden, wobei sich jeder der Wälzkörper (7) eines jeweiligen Wälzkörperkranzes (14) in den jeweiligen Taschen oder Sitzen (11) der Käfige befindet, wobei die Käfige (9) des Paares von Käfigen einander gegenüberliegend und nebeneinander zwischen dem inneren (5) und dem äußeren (6) Ring angeordnet sind, entsprechend jeweiligen ringförmigen Laufbahnen (15) für die Wälzkörper (7) zusammengefasst sind, die auf einer radial inneren Seitenfläche (16) des äußeren Rings (6) erhalten werden; wobei die Laufbahnen (15) durch einen vorab festgelegten axialen Abstand (OBW) voneinander getrennt sind, wobei der Wert des vorab festgelegten axialen Abstands (OBW) der folgenden Formel entsprechen muss:

$$OBW = c * 1{,}17 * D_w \qquad [3]$$

wobei:

Dw der maximale Durchmesser eines Wälzkörpers (7) wie vorstehend definiert ist, wobei die Wälzkörper (7) identisch sind; und c eine numerische Konstante ist, die zwischen 1,1 und
1,93 liegen muss, wenn die Wälzkörper 7 aus zylindrischen Walzen bestehen, und zwischen 0,9 und 1,85, wenn die Wälzkörper 7 aus konischen Walzen bestehen.

3. Wälzlager (2) nach einem der Ansprüche 1 oder 2, **dadurch gekennzeichnet, dass** die Wälzkörper aus konischen Walzen (7) bestehen und zu zwei ringförmigen Wälzkörperkränzen (14) zusammengefasst sind, die jeweils von einem jeweiligen Haltekäfig (9) getragen werden, wobei die konischen Walzen (7), die jeden Wälzkörperkranz (14) bilden, in Taschen oder Sitzen (11) so angeordnet sind, dass sie zu den konischen Walzen (7) des anderen Wälzkörperkranzes (14) hin den minimalen Durchmesser (D3) aufweisen.

4. Wälzlager (2) nach einem der Ansprüche 1 oder 2, **dadurch gekennzeichnet, dass** die Wälzkörper (7) aus zylindrischen Walzen bestehen, wobei der minimale (D3) und der maximale (Dw) Durchmesser entsprechend identisch sind.

5. Wälzlager (2) nach einem der Ansprüche 1 bis 4, **dadurch gekennzeichnet, dass** der Ringkörper (10) des mindestens einen Käfigs (9) aus einem spritzgegossenen Polyamid hergestellt ist.

6. Verfahren zum Herstellen eines Wälzlagers (2), insbesondere zur Verwendung im Schienenverkehr, umfassend einen radial inneren Ring (5), einen radial äußeren Ring (6), eine Vielzahl von Wälzkörpern (7), die zwischen dem inneren und dem äußeren Ring (5, 6) angeordnet sind, um diese relativ zueinander drehbar zu machen, und mindestens einen Käfig (9) zum Halten der Wälzkörper, wobei der Käfig (9) einen Ringkörper (10) umfasst, der mit einer Vielzahl radial verlaufender Taschen oder Sitze (11) versehen ist, von denen jede so konfiguriert ist, dass sie einen jeweiligen Wälzkörper (7) freilaufend aufnimmt; wobei die Taschen oder Sitze (11) an dem Ringkörper (10) des Käfigs (9) in einer vorbestimmten Anzahl (N) vorhanden sind, die der Anzahl in dem Käfig (9) gehaltener Wälzkörper (7) entspricht, wobei das Verfahren den folgenden Schritt umfasst:

(i)- Berechnen der vorbestimmten Anzahl N unter Verwendung der folgenden Formel:

$$N° = \frac{\pi P}{k * a * \frac{D_w + D_3}{2}} \qquad [1]$$

wobei:

N die vorab festgelegte Anzahl von Taschen oder Sitzen (11) ist, die in dem Ringkörper des Käfigs vorhanden sind;

P der Primitivdurchmesser des Wälzlagers (2) ist, d. h. der Durchmesser eines Umfangs (C), auf dem die Wälzkörper ausgerichtet sind;

Dw der maximale Durchmesser eines Wälzkörpers (7) ist, wobei die Wälzkörper zueinander identisch sind;

D3 der minimale Durchmesser desselben Wälzelements (7) ist;

a eine numerische Konstante ist, die zwischen 1,26 und 1,36 liegen muss; und

k eine numerische Konstante ist, die zwischen 0,83 und 1 liegen muss, wenn die Wälzkörper (7) aus zylindrischen Walzen bestehen, und die 1 beträgt, wenn die Wälzkörper (7) aus konischen Walzen bestehen; und

(ii)- Berechnen einer Längserstreckung (Lw) der Taschen oder Sitze (11), gemessen parallel zu einer Laufbahn (15) für einen jeweiligen Wälzkörper (7), der sich in der Tasche oder dem Sitz (11) befindet, wobei die Laufbahn auf einer inneren Seitenfläche (16) des äußeren Rings (6) erhalten wird, unter Verwendung der folgenden Formel:

$$l_w = b * 1,73 * D_w \qquad [2]$$

- wobei lw die Längserstreckung jeder der Taschen oder Sitze (11) wie vorstehend definiert ist;
- Dw der maximale Durchmesser eines Wälzkörpers (7) ist, wobei die Wälzkörper zueinander identisch sind; und
- b eine numerische Konstante ist, die stets zwischen 0,83 und 1,16 liegen muss.

## Revendications

1. Palier à roulement (2), particulièrement pour utilisation ferroviaire, comprenant une bague radialement intérieure (5), une bague radialement extérieure (6), une pluralité d'éléments de roulement (7) interposés entre les bagues intérieure et extérieure (5, 6) pour les rendre relativement rotatives, et au moins une cage (9) destinée à retenir les éléments de roulement, la cage (9) comprenant un corps annulaire (10) pourvu d'une pluralité de poches ou de sièges passant radialement (11), dont chacun est configuré pour loger de façon inactive un élément de roulement respectif (7) ; dans lequel lesdites poches ou lesdits sièges (11) sont présent(e)s sur le corps annulaire (10) de la cage (9) en un nombre prédéterminé (N), correspondant au nombre d'éléments de roulement (7) retenus dans la cage (9), ledit nombre prédéterminé (N) étant compris entre une valeur maximum et une valeur minimum fournies par la formule :

$$[1] \qquad N° = \frac{\pi P}{k * a * \frac{D_w + D_3}{2}}$$

dans laquelle :

- N est ledit nombre préfixé de poches ou de sièges (11) présent(e)s dans ledit corps annulaire de la cage ;
- P est le diamètre primitif du palier à roulement (2), à savoir le diamètre d'une circonférence (C) sur laquelle les éléments de roulement sont alignés ;
- Dw est le diamètre maximum d'un élément de roulement (7), les éléments de roulement étant identiques les uns aux autres ;
- D3 est le diamètre minimum du même élément de roulement (7) ;
- a est une constante numérique qui doit être entre 1,26 et 1,36 ; et
- k est une constante numérique qui doit être entre 0,83 et 1 si les éléments de roulement (7) sont constitués de rouleaux cylindriques et qui est de 1 si les éléments de roulement (7) sont constitués de rouleaux coniques ; **caractérisé par le fait que**, en association avec ledit nombre préfixé de poches ou sièges (11) donné par la formule ci-dessus [1], les poches ou sièges (11) du corps annulaire (10) de la cage (9) ont chacun(e) une extension longitudinale (Lw), mesurée parallèlement à un chemin de roulement (15) pour un élément de roulement respectif (7) logé dans ladite poche ou ledit siège (11), le chemin de roulement étant obtenu sur une surface latérale intérieure (16) de la bague extérieure (6), ayant une valeur fournie par la formule :

$$l_w = b * 1,73 * D_w \qquad [2]$$

- dans laquelle $l_w$ est l'étendue longitudinale de chaque dite poche ou dit siège (11), comme cela est défini ci-dessus ;
- Dw est le diamètre maximum d'un élément de roulement (7), les éléments de roulement étant identiques les uns aux autres ; et

b est une constante numérique qui doit toujours être entre 0,83 et 1,16.

2. Palier à roulement (2) selon la revendication 1, **caractérisé en ce que** les éléments de roulement (7) sont collectés pour former deux couronnes annulaires (14) d'éléments de roulement, lesdites couronnes (14) étant supportées par une paire de cages de retenue (9), chacun des éléments de roulement (7) d'une couronne respective (14) d'éléments de roulement étant logé dans les poches respectives ou sièges respectifs (11) des cages, lesdites cages (9) de ladite paire de cages étant agencées l'une en face de l'autre et côte à côte entre les bagues intérieure (5) et extérieure (6), en correspondance avec des chemins de roulement annulaires respectifs (15) pour les éléments de roulement (7) obtenus sur une surface latérale radialement interne (16) de la bague extérieure (6) ; lesdits chemins de roulement (15) étant séparés l'un de l'autre par un espace axial préfixé (OBW), la valeur dudit espace axial préfixé (OBW) devant être conforme à la formule :

$$OBW = c * 1,17 * D_w \qquad [3]$$

dans laquelle :

Dw est le diamètre maximum d'un élément de roulement (7) comme cela est défini ci-dessus, les éléments de roulement (7) étant identiques ; et
c est une constante numérique qui doit être entre 1,1 et 1,93 si les éléments de roulement (7) sont constitués de rouleaux cylindriques et entre 0,9 et 1,85 si les éléments de roulement (7) sont constitués de rouleaux coniques.

3. Palier à roulement (2) selon de quelconques des revendications 1 ou 2, **caractérisé en ce que** les éléments de roulement consistent en des rouleaux coniques (7) et sont collectés pour former deux couronnes annulaires (14) d'éléments de roulement, chacune supportée par une cage de retenue respective (9), les rouleaux coniques (7) formant chaque couronne (14) d'éléments de roulement étant agencés dans des poches ou sièges (11) afin de présenter, vers les rouleaux coniques (7) de l'autre couronne (14) d'éléments de roulement, ledit diamètre minimum (D3).

4. Palier à roulement (2) selon de quelconques des revendications 1 ou 2, **caractérisé en ce que** les éléments de roulement (7) sont constitués de rouleaux cylindriques, dans lequel lesdits diamètres minimum (D3) et maximum (Dw) sont par conséquents identiques.

5. Palier à roulement (2) selon de quelconques des revendications 1 à 4, **caractérisé en ce que** ledit corps annulaire (10) de ladite au moins une cage (9) est fait d'un polyamide moulé par injection.

6. Procédé pour concevoir un palier à roulement (2), particulièrement pour utilisation ferroviaire, comprenant une bague radialement intérieure (5), une bague radialement extérieure (6), une pluralité d'éléments de roulement (7) interposés entre les bagues intérieure et extérieure (5, 6) pour les rendre relativement rotatives, et au moins une cage (9) destinée à retenir les éléments de roulement, la cage (9) comprenant un corps annulaire (10) pourvu d'une pluralité de poches ou de sièges passant radialement (11), dont chacun est configuré pour loger de façon inactive un élément de roulement respectif (7) ; dans lequel lesdites poches ou lesdits sièges (11) sont présent(e)s sur le corps annulaire (10) de la cage (9) en un nombre prédéterminé (N), correspondant au nombre d'éléments de roulement (7) retenus dans la cage (9), ledit procédé comprenant l'étape suivante

(i)- le calcul dudit nombre prédéterminé N en utilisant la formule suivante :

$$N° = \frac{\pi P}{k * a * \dfrac{D_w + D_3}{2}} \qquad [1]$$

dans laquelle :

N est ledit nombre préfixé de poches ou sièges (11) présent(e)s dans ledit corps annulaire de la cage ;
P est le diamètre primitif du palier à roulement (2), à savoir le diamètre d'une circonférence (C) sur laquelle les éléments de roulement sont alignés ;
Dw est le diamètre maximum d'un élément de roulement (7), les éléments de roulement étant identiques les uns aux autres ;
D3 est le diamètre minimum du même élément de roulement (7) ;
a est une constante numérique qui doit être entre 1,26 et 1,36 ; et
k est une constante numérique qui doit être entre 0,83 et 1 si les éléments de roulement (7) sont constitués de rouleaux cylindriques et qui est de 1 si les éléments de roulement (7) sont constitués de rouleaux coniques ; et

(ii)- le calcul d'une extension longitudinale (Lw) desdites poches ou desdits sièges (11), mesurée parallèlement à un chemin de roulement (15) pour un élément de roulement respectif (7) logé dans ladite poche ou ledit siège (11), le chemin de roulement étant obtenu sur une surface latérale intérieure (16) de la bague extérieure (6), en utilisant la formule suivante :

$$l_w = b * 1{,}73 * D_w \qquad [2]$$

- dans laquelle lw est l'étendue longitudinale de chaque dite poche ou dit siège (11), comme cela est défini ci-dessus ;
- Dw est le diamètre maximum d'un élément de roulement (7), les éléments de roulement étant identiques les uns aux autres ; et
- b est une constante numérique qui doit toujours être entre 0,83 et 1,16.

FIG. 2

FIG. 1

FIG. 3

FIG. 5

FIG. 4

EP 4 206 483 B1

**REFERENCES CITED IN THE DESCRIPTION**

**Patent documents cited in the description**

- US 9016950 B2

- EP 1785638 A2